# EUROPEAN PATENT APPLICATION

(11) **EP 1 653 536 A1**
(43) Date of publication of application: **03.05.2006**
(21) Application number: 04747605.6
(22) Date of filing: 15.07.2004
(51) Int. Cl.: H01M 4/96, H01M 4/86, H01M 4/88, H01M 4/92, H01M 8/02, H01M 8/10

(54) **FUEL CELL, ELECTRODE MATERIAL FOR FUEL CELL AND METHOD FOR PRODUCING SAME**

(30) Priority: 18.07.2003 JP 2003276381; 10.09.2003 JP 2003318608
(71) Applicant: Shinano Kenshi Kabushiki Kaisha, Nagano 386-0498 (JP)
(72) Inventor: HASHIZUME, H., c/o Shinano Kenshi Kabushiki Kaisha, Chiisagata-gun, Nagano 3860498 (JP); SHIMIZU, M., c/o Shinano Kenshi Kabushiki Kaisha, Chiisagata-gun, Nagano 3860498 (JP); YAWATA, Tomio, c/o Shinano Kenshi Kabushiki Kaisha, Chiisagata-gun, Nagano 3860498 (JP)
(74) Representative: Calderbank, Thomas Roger
(86) International application number: PCT/JP2004/010139
(87) International publication number: WO 2005/008815

(57) **Abstract**

The present invention provides a fuel cell, which enables to reduce production cost and has excellent cell characteristics. The fuel cell comprises a cell element 20, in which a cathode layer 24 is formed on one side of an electrolyte membrane 22 and an anode layer 26 is formed on the other side thereof, and generates an electromotive force through oxidation-reduction reaction, which occurs via the electrolyte membrane 22, between a fuel such as methane and an oxidant such as oxygen supplied, the fuel cell is **characterized in that** at least one of the cathode layer 24 and the anode layer 26 contains an electrode material 24a, 26b which is composed of a carbonized silk body obtained by burning a silk material and a catalyst metal supported by the carbonized silk body.

## Description

### FIELD OF TECHNOLOGY

The present invention relates to a fuel cell, an electrode material for the fuel cell and a method for producing the electrode material.

### BACKGROUND TECHNOLOGY

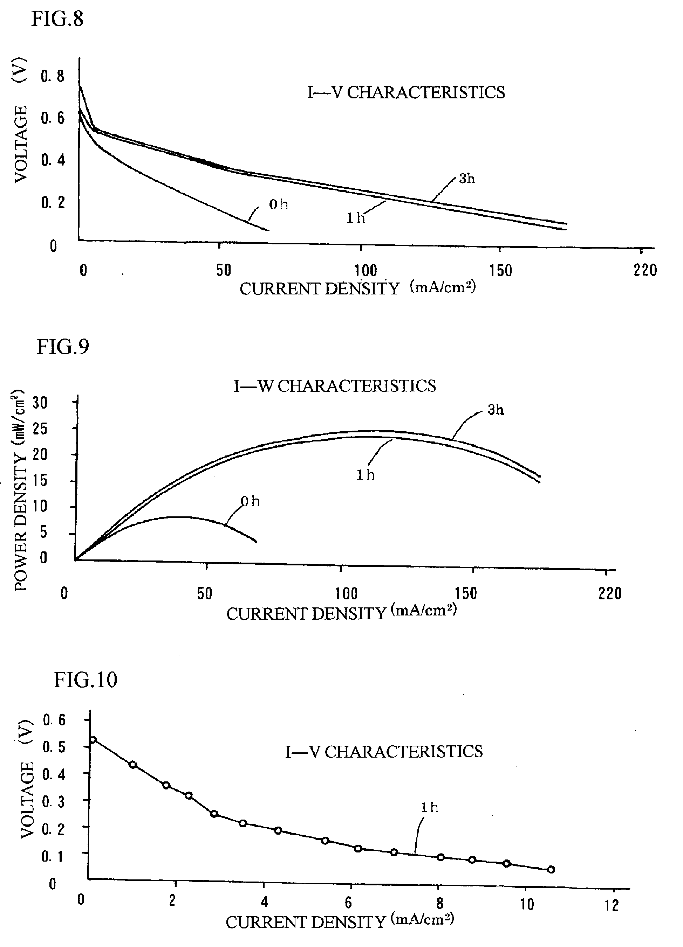

An example of a cell element 10 of a conventional fuel cell is shown in Fig. 7.

A symbol 12 stands for an electrolyte membrane 12. In the cell element 10, a cathode layer 14 is formed on one side of the electrolyte membrane 12 and an anode layer 16 (a fuel electrode) is on the other side thereof. Electrode plates, not shown, are provided to the cathode layer 14 and the anode layer 16, and cables (not shown) are connected to the both electrode plates.

A fuel and oxygen or a gas including oxygen (an oxidant) are supplied to the cell element 10, so that oxidation-reduction reaction occurs via the electrolyte membrane 12 and an electromotive force is generated.

Electrode materials 14a and 16a, which support catalyst metals for accelerating electrode reaction, are provided to the cathode layer 14 and the anode layer 16. The electrode plates are attached to the electrode materials so as to form electrodes.

Various types of electrode materials have been studied, for example, catalyst layers 14c and 16c are respectively formed in carbon cloth (or carbon paper) 14b and 16b, which act as diffusion layers of the fuel and the gas.

The catalyst layers 14c and 16c are formed by the steps of: supporting the catalyst metals, e.g., platinum, ruthenium, on the carbon powders; mixing the carbon powders, which support the catalyst metals, with a nafion solution or the like so as to form into paste; applying the paste to the carbon cloth 14b and 16b; and heating the carbon cloth so as to volatilize the solution (see Patent Document 1).

Patent Document 1: Japanese Patent Gazette No. 6-20710.

### DISCLOSURE OF THE INVENTION

The catalyst layers 14c and 16c, in which the carbon powders supporting the catalyst metals are applied to the carbon cloth (or carbon paper), have poor air-permeability so that the catalyst metals cannot work well. Further, a large amount of carbon powders and a large amount of catalyst metals are required, so that production cost of the cell element must be increased.

Carbon paper made from carbon fibers has poor flexibility.

Carbon cloth has enough flexibility and toughness, but if fuel permeability and catalyst supportability are optimized, the production cost must be further increased, namely the carbon cloth has a problem of impractical.

In case of a fuel cell using methanol as a fuel, methanol is not sufficiently oxidized in electrode reaction, so that formaldehyde is generated from a fuel electrode. Further, formaldehyde is reacted with methanol so that methyl formate is generated. Their amounts are very small, but they are harmful substances irritating noses and lungs.

The present invention was conceived to solve the above described problems, and an object thereof is to provide a fuel cell, which enables to reduce production cost and has excellent cell characteristics, an electrode material for the fuel cell and a method for producing the electrode material.

The fuel cell of the present invention comprises a cell element, in which a cathode layer is formed on one side of an electrolyte membrane and an anode layer is formed on the other side thereof, and generates an electromotive force through oxidation-reduction reaction, which occurs via the electrolyte membrane, between a fuel such as methane and an oxidant such as oxygen supplied, and at least one of the cathode layer and the anode layer contains an electrode material.

The fuel cell is characterized in that a catalyst metal is supported by the carbonized silk body.

The fuel cell is characterized in that the carbonized silk body has a catalyst layer including a carbon material which supports a catalyst metal.

Preferably, the catalyst metal is platinum or platinum-ruthenium.

Preferably, the carbonized silk body is formed into a sheet-shaped with airspaces by burning the cloth-formed silk material.

The carbonized silk body has enough flexibility and can be deformed along a shape of an electrode. By burning the cloth-formed silk material (including woven cloth, knitted works, unwoven cloth), the carbonized silk body has a space structure and interspaces, so that the carbonized silk body has excellent fuel permeability, gas permeability and catalyst supportability.

Further, the fuel cell is characterized in that a harmful substance decomposer is supported by the carbonized silk body.

Preferably, the harmful substance decomposer is metallophthalocyanine derivative.

Since the harmful substance decomposer is supported by the carbonized silk body which has excellent fuel and gas permeability, harmful substances can be efficiently decomposed and no harmful substances are discharged outside of the fuel cell.

The electrode material for a fuel cell is composed of a carbonized silk body obtained by burning a silk material.

The electrode material is characterized in that a catalyst metal is supported by the carbonized silk body.

In other cases, the carbonized silk body may have a catalyst layer including carbon powders which support catalyst metals.

Preferably, the catalyst metal is platinum or platinum-rutheniium.

The electrode material is characterized in that the carbonized silk body is formed into a sheet-shaped with airspaces by burning the cloth-formed silk material.

The electrode material is characterized in that the silk material is burned at temperature of 1000-3,000°C.

Preferably, the carbonized silk body is activation-treated so as to form many micro fine holes in a surface thereof.

The method for producing an electrode material of a fuel cell, which is constituted by a carbonized silk body, comprises a plurality of steps of burning a silk material in an inert gas atmosphere so as to form the carbonized silk body , and each of the burning steps comprises the steps of: primary-burning the silk material with temperature rising rate of 100°C/hour or less until reaching a burning temperature and maintaining the burning temperature for several hours; cooling the burned silk material until reaching the room temperature; and secondary-burning the silk material at another burning temperature, which is higher than the burning temperature of the primary-burning step.

Preferably, the burning temperature of the final burning step is 1000-3,000°C.

The method is characterized by further comprising the step of supporting a catalyst metal on the carbonized silk body.

The method is characterized in that the silk material is formed into cloth made of yarns.

Preferably, the method further comprises the step of exposing the silk material, which has been secondary-burned, to high-temperature steam as an activation treatment.

### EFFECTS OF THE INVENTION

According to the present invention, in the carbonized silk body, interspaces exist between single yarns or twisted yarns, which are constituted by fibers, or fibers constituting unwoven cloth, and permeability and diffusivity of fuel and a gas are improved so that power generation efficiency of the fuel cell can be improved. Further, contact efficiency of the fuel and the gas with the catalyst supported by the carbonized silk body or the catalyst layer formed in the carbonized silk body can be improved, so that catalytic function can be well brought out and an electromotive force can be stably generated.

By improving the contact efficiency of the gas with the catalyst metal, an amount of the catalyst metal can be reduced so that the production cost can be reduced.

Further, since the carbonized silk body is not deteriorated at high temperature, a span of life of the fuel cell can be made longer.

### BRIEF DESCRIPTION OF THE DRAWINGS

Fig. 1 is a schematic view of a cell element of a fuel cell.
Fig. 2 is a raman spectrum chart of a burned body, which was produced by burning a coarse-grained silk at temperature of 2,000°C.
Fig. 3 is a raman spectrum chart of a burned body, which was produced by burning a coarse-grained silk at temperature of 700°C.
Fig. 4 is a raman spectrum chart of a burned body, which was produced by burning a coarse-grained silk at temperature of 1,000°C.
Fig. 5 is a raman spectrum chart of a burned body, which was produced by burning a coarse-grained silk at temperature of 1,400°C.
Fig. 6 is an FE-SEM photograph of a silk material burned at temperature of 2,000°C.
Fig. 7 is a schematic view of a cell element of the conventional fuel cell.
Fig. 8 is a graph of output characteristics (I-V characteristics) of an MEA of Example 3, in which a carbonized silk body is used as a diffusion layer.
Fig. 9 is a graph of output characteristics (I-W characteristics) of the MEA of Example 3, in which the carbonized silk body is used as the diffusion layer.
Fig. 10 is a graph of output characteristics (I-W characteristics) of the MEA of Comparative Example, in which the carbon paper is used as the diffusion layer.

### PREFERRED EMBODIMENTS OF THE INVENTION

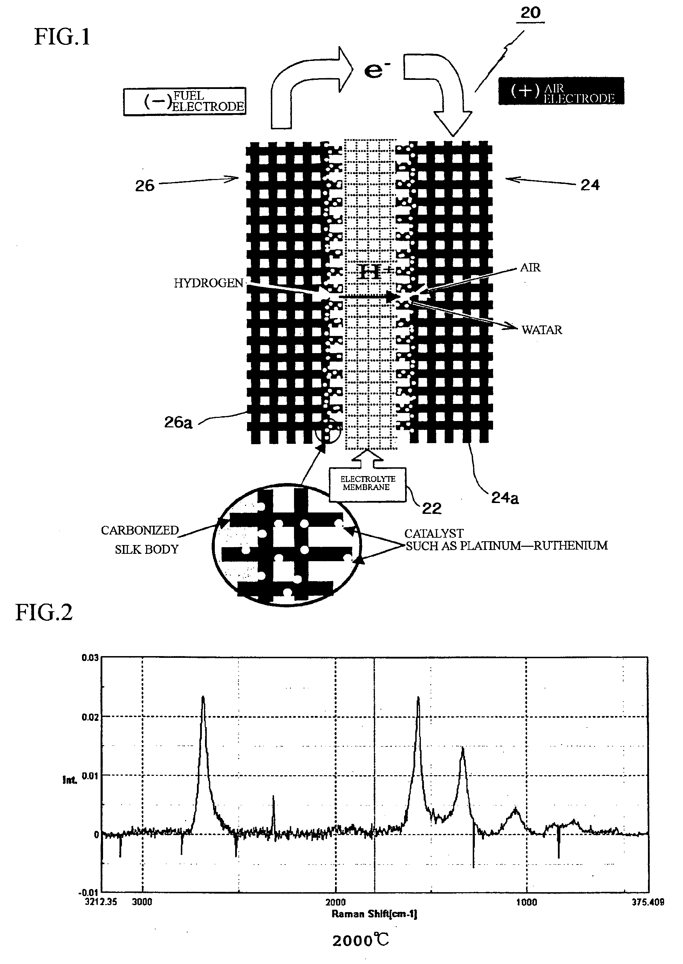

Fig. 1 is a schematic view of a cell element 20 of a fuel cell of the present invention.

A symbol 22 stands for an electrolyte membrane. In the cell element 20, a cathode layer 24 is formed on one side of the electrolyte membrane 22 and an anode layer (a fuel layer) 26 is formed on the other side thereof. Electrode plates (not shown) are respectively provided to the cathode layer 24 and the anode layer 26, and cables (not shown) are respectively connected to the electrode plates.

A fuel and oxygen or a gas including oxygen (an oxidant) are supplied to the cell element 20, and an electromotive force is generated through oxidation-reduction reaction, which occurs via the electrolyte membrane 22.

Note that, types of fuel cells are not limited.

The cathode layer 24 and the anode layer 26 contains electrode materials 24a and 26b, on which catalyst metals are supported so as to accelerate electrode reaction. The electrodes are attached to the electrode materials to form electrodes.

The present invention is characterized by the electrode materials 24a and 26a.

A method for producing the electrode materials 24a and 26a will be explained.

Each of the electrodes 24a and 26a is composed of a carbonized silk body obtained by burning a silk material and the catalyst metal supported by the carbonized silk body.

Suitable catalyst metals are platinum, platinum alloys, platinum-ruthenium, gold, palladium, etc..

In the following description, the silk materials include woven fabrics, knitted works, powders, cloth, strings, etc. made of threads of domesticated or wild silk worms. The carbonized silk body is produced by burning the silk material or materials.

The silk material should be burned at high temperature, e.g., 1,000-3000°C.

A burning atmosphere should be an inert gas atmosphere, e.g., nitrogen gas atmosphere, argon gas atmosphere, or a vacuum atmosphere so as not to burn the silk material to cinders.

The silk material should be burned in stages without rapid burning.

For example, the silk material is primary-burned in the inert gas atmosphere with low temperature rising rate of 100°C/hour or less, preferably 50°C/hour or less, until reaching a first temperature (e.g., 500°C), then the first temperature is maintained for several hours. The silk material is once cooled until reaching the room temperature, then the silk material is secondary-burned in the same atmosphere with low temperature rising rate of 100°C/hour or less, preferably 50°C/hour or less, until reaching a second temperature (e.g., 700°C) and the second temperature is maintained for several hours. Then, the silk material or the carbonized silk body is cooled until the room temperature. Further, the silk material is thirdly burned at final burning temperature (e.g., 2000°C) so as to produce the carbonized silk body. Note that, burning conditions are not limited to the above described embodiment, they may be optionally changed on the basis of kinds of silk materials, functions of carbonized silk bodies, etc..

By burning the silk material in stages and burning with the low temperature rising rate, rapid decomposition of a protein high-order structure, in which crystalline forms and noncrystalline forms of a dozen of amino acids are combined, can be avoided, and the soft (flexible) and glossy black carbonized silk body can be produced.

Fig. 2 is a raman spectrum chart of a burned body, which was produced by burning a coarse-grained silk at temperature of 2,000°C (the final burning temperature). Peaks were observed at 2681cm⁻¹, 1570cm⁻¹ and 1335cm⁻¹, so the coarse-grained silk was graphitized.

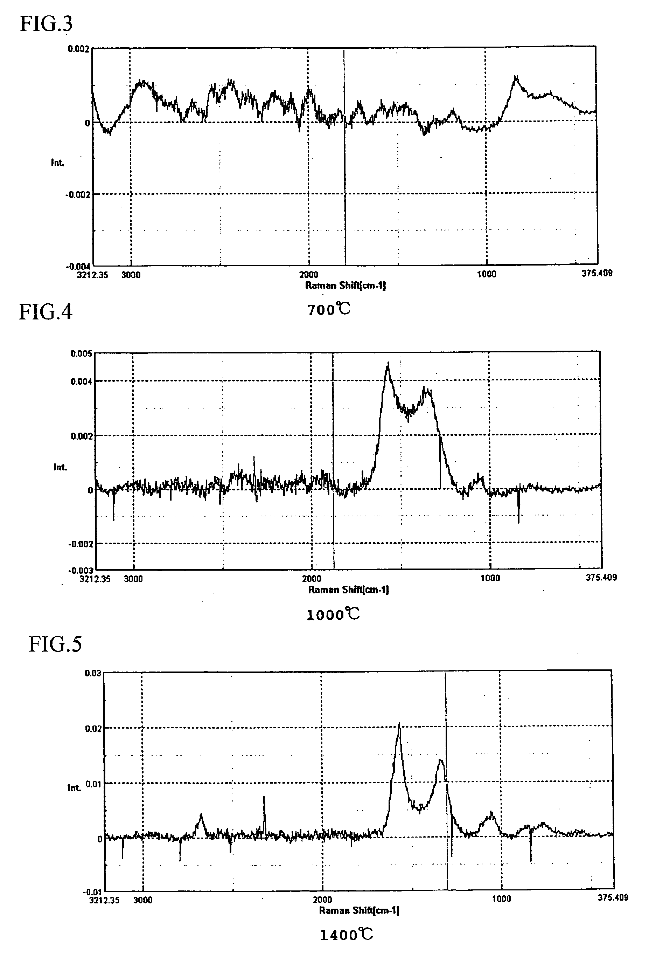

Figs. 3-5 are raman spectrum charts of burned body, which were produced by respectively burning coarse-grained silks at 700°C, 1,000°C and 1,400°C. By burning at 1,400°C, peaks were low but observed at the same three points.

By burning at 1,000°C or below, no peaks were observed, so the burned body were not graphitized and they do not have high electric conductivities.

In the present invention, the silk materials, which will be used as the electrode materials, are burned at high temperature, e.g., 1,000-3,000°C (the final burning temperature).

Specific resistances of the burned silk materials (woven cloth) burned at 1,400°C and 2,000 °C were measured, the results of the both samples (filaments of single yarns) were about 1 × 10⁻⁵(Ω · m), which was greater than that of graphite (4-7 × 10⁻⁷ Ω · m) but smaller than that of carbon (4 × 10⁻⁵), so they had good electric conductivities.

In a first embodiment of the electrode materials of the present invention, the catalyst metals are supported by the carbonized silk produced by the above described method.

As described above, the suitable catalyst metals are platinum, platinum alloys, platinum-ruthenium, gold, palladium, etc..

The catalyst metal may be supported by the following process.

In case of using platinum, for example, the carbonized silk body is pretreated, by soaking into a nitric acid solution or a hydrogen peroxide solution, and dried, then a chloroplatinic acid solution is applied to the carbonized silk body or the carbonized silk body is soaked into the solution so as to support platinum on the carbonized silk body.

Preferably, the surface of the carbonized silk body may be activation-treated so as to form many holes and broaden surface area.

Note that, the carbonized silk body may be exposed to high temperature steam as the activation treatment, so that many micro fine holes (diameters 0.1-several dozen nm) can be formed in the surface of the carbonized silk body.

The carbonized silk bodies supporting the catalyst metals can be directly used as the electrode materials 24a and 26a.

Thickness, volume, etc. of the silk material can be optionally varied by adjusting thickness of strings (single yarns), selecting a method of twisting, knitting and weaving strings and density of unwoven cloth; air permeability (or fuel and gas permeability) of the carbonized silk body can be optionally controlled by adjusting the thickness, density, etc. of the silk cloth material.

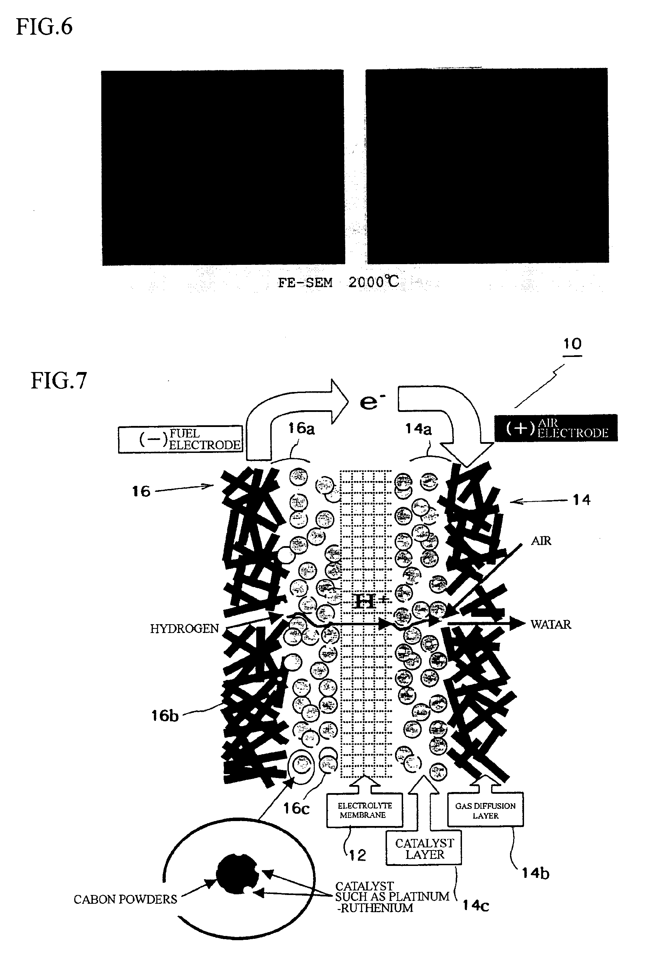

As shown in Fig. 6, the catalyst metals are supported on surfaces of fibers of the carbonized silk body, and suitable spaces exist between single yarns and twisted yarns, which are constituted by the fibers, or the fibers of unwoven cloth, so that contact efficiency of a fuel and air with the catalyst metal can be improved, catalytic function can be well brought out and an electromotive force can be stably generated.

By improving the contact efficiency of a gas with the catalyst metal, an amount of the catalyst metal can be reduced so that the production cost can be reduced.

Note that, in Fig. 1, the catalyst metals are supported on parts of the electrode materials 24a and 26a; actually, the metal catalysts are uniformly supported on the surfaces of all single yarns and fibers constituting the carbonized silk body.

The carbonized silk body has enough flexibility and can be easily formed into any shapes.

Further, since the carbonized silk body is not deteriorated even at high temperature, a span of life of the fuel cell can be made longer.

In a second embodiment of the electrode material of the present invention is characterized in that a catalyst layer, which includes carbon powders supporting the catalyst metals, is formed in the carbonized silk body, which is obtained by burning the silk material as described above.

The catalyst layer is formed, as well as the conventional method, by the steps of: supporting the catalyst metals, e.g., platinum, platinum-ruthenium, on the carbon powders; mixing the carbon powders, which support the catalyst metals, with a nafion solution or the like so as to form into paste; applying the paste to a surface (one side face) of the sheet-shaped carbonized silk body; and heating the carbonized silk body so as to volatilize the solution.

Further, the catalyst layer may be formed by the steps of: supporting the catalyst metals, e.g., platinum, platinum-ruthenium, on carbon nano fibers, e.g., VGCF (registered trademark); mixing the carbon nano fibers, which support the catalyst metals, with a nafion solution or the like so as to form into paste; applying the paste to a surface (one side face) of the sheet-shaped carbonized silk body; and heating the carbonized silk body so as to volatilize the solution.

In the present embodiment, the catalyst layer is formed on the carbonized silk body. In the carbonized silk body, which is formed by burning the cloth-formed silk material, the airspaces exist between single yarns or twisted yarns, which are constituted by fibers, or fibers constituting unwoven cloth, and permeability and diffusivity of the fuel and the gas are improved so that power generation efficiency of the fuel cell can be improved. Further, the contact efficiency of the fuel and the gas with the catalyst layer formed in the carbonized silk body can be improved, so that catalytic function can be well brought out and an electromotive force can be stably generated.

Successively, a third embodiment of the electrode material of the present invention includes a harmful substance decomposer, e.g., metallophthalocyanine derivative, supported by the above described carbonized silk body.

In the present embodiment, the catalyst metal may be supported on the carbonized silk body as well as the first embodiment, and the harmful substance decomposer may be supported thereon; the catalyst layer may be formed on the carbonized silk body as well as the second embodiment, and the harmful substance decomposer may be supported on the mere carbonized silk body.

Metallophthalocyanine derivatives may be supported on a surface of the carbonized silk body by spraying a solution of metallophthalocyanine derivative to the carbonized silk body, soaking the carbonized silk body into the solution of metallophthalocyanine derivative, etc..

Preferably, the surface of the carbonized silk body is activation-treated so as to form many holes and broaden surface area, and metallophthalocyanine derivatives are supported thereon. With this structure, properties of absorbing and decomposing harmful substances can be improved.

Metallophthalocyanine derivatives bring out catalytic function at the room temperature and absorb and decompose harmful substances, e.g., formaldehyde, methyl formate, generated on the fuel electrode side. Since harmful substances generated in the fuel cell are decomposed in the fuel cell, no harmful substances are discharged outside of the fuel cell.

For example, Fe(III)-octa carboxy phtalocyanine (oaPc), Fe(III)-tetra carboxy phtalocyanine (taPc), etc. may be used as metallophthalocyanine derivatives.

For example, the carbonized silk body may be exposed to steam, whose temperature was 850°C, as the activation treatment. By the activation treatment, many micro fine holes (diameters 0.1-several dozen nm) are formed in the surface of each carbonized silk body; the surface area of the carbonized silk body can be broadened about 1,000 times.

### Example 1

A silk material was heated in a nitrogen gas atmosphere until reaching first temperature (450°C) with low temperature rising rate of 50°C/hour, then the material was burned at the first temperature for five hours as the primary burning. Next, the burned material was once cooled until reaching the room temperature, then the material was reheated in the nitrogen gas atmosphere until reaching second temperature (1,000°C) with low temperature rising rate of 50°C/hour, then the material was burned at the second temperature for five hours as the secondary burning. Further, the burned material was cooled until reaching the room temperature, then the material was reheated in the nitrogen gas atmosphere until reaching third temperature (2,000°C or final burning temperature) with low temperature rising rate of 50°C/hour, then the material was burned at the third temperature for five hours as the third burning. Then, the burned material was cooled, so that the carbonized silk body shown in Fig. 6 was obtained.

The carbonized silk body was pretreated, by soaking into a nitric acid solution or a hydrogen peroxide solution, then a chloroplatinic acid solution was applied or sprayed to the carbonized silk body or the carbonized silk body was soaked into the solution, and the carbonized silk body was dried so as to obtain an electrode material of a fuel cell supporting platinum.

Further, a metallophthalocyanine solution was applied or sprayed to the electrode material or the electrode material was soaked into the solution, and the electrode material was dried so as to obtain the electrode material of the fuel cell.

### Example 2

A silk material was heated in a nitrogen gas atmosphere until reaching first temperature (450°C) with low temperature rising rate of 50°C/hour, then the material was burned at the first temperature for five hours as the primary burning. Next, the burned material was once cooled until reaching the room temperature, then the material was reheated in the nitrogen gas atmosphere until reaching second temperature (1,000°C) with low temperature rising rate of 50°C/hour, then the material was burned at the second temperature for five hours as the secondary burning. Further, the burned material was cooled until reaching the room temperature, then the material was reheated in the nitrogen gas atmosphere until reaching third temperature (2,000°C or final burning temperature) with low temperature rising rate of 50°C/hour, then the material was burned at the third temperature for five hours as the third burning. Then, the burned material was cooled, so that the carbonized silk body shown in Fig. 6 was obtained.

The carbonized silk body was exposed to steam, whose temperature was 850°C, as the activation treatment, then a metallophthalocyanine solution was applied or sprayed to the carbonized silk body or the carbonized silk body was soaked into the solution, and the carbonized silk body was dried so as to obtain the electrode material of the fuel cell.

### Example 3

A silk material was burned in a nitrogen gas atmosphere at final burning temperature of 1,400°C as well as the above described examples, then the burned material was cooled until reaching the room temperature so as to obtain a carbonized silk body. Carbon powders, which support the catalyst metals, were mixed with a nafion solution or the like so as to form into paste, the paste was applied to the carbonized silk body, and the carbonized silk body was heated so as to volatilize the solution, so that a catalyst layer was formed on the carbonized silk body. The carbonized silk body having the catalyst layer was used as a diffusion layer, and a nafion electrolyte membrane was inserted therein and hot-pressed, so that an MEA (membrane-electrode adelphus ???), which was a constitutional unit of a fuel cell, was formed. Measured output characteristics of the MEA (membrane-electrode assembly) are shown in Figs. 8 and 9. Fig. 8 shows I-V characteristics; Fig. 9 shows I-W characteristics.

Amount of catalysts supported on the electrode are shown in TABLE 1.

**TABLE 1**

| AMOUNT OF CATALYST | |
|---|---|
| ANODE | Pt 0.528 mg/cm², Ru 0.409 mg/cm² |
| CATHODE | Pt 1.16 mg/cm² |

Maximum power density, etc. are shown in TABLE 2.

**TABLE 2**

| TIME | MAXIMUM POWER DENSITY (mW/cm²) | CURRENT DENSITY (mA/cm²) | VOLTAGE |
|---|---|---|---|
| 0h | 8.199 | 36.7 | 0.2235 |
| 1h | 24.14 | 104.3 | 0.2315 |
| 3h | 25.36 | 114.7 | 0.221 |

### Comparative Example

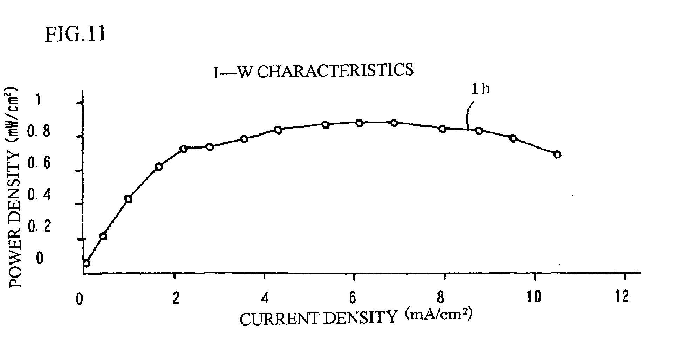

A catalyst layer was formed on carbon paper by the steps of: supporting the catalyst metals, e.g., platinum, ruthenium, on carbon powders; mixing the carbon powders, which support the catalyst metals, with a nafion solution or the like so as to form into paste; applying the paste to the carbon paper; and heating the carbon paper so as to volatilize the solution. The carbon paper having the catalyst layer was used as a diffusion layer, and a nafion electrolyte membrane was inserted therein and hot-pressed, so that an MEA (membrane-electrode adelphus ???), which was a constitutional unit of a fuel cell, was formed (as a comparative example). Measured output characteristics of the MEA (membrane-electrode assembly) are shown in Figs. 10 and 11. Fig. 10 shows I-V characteristics; Fig. 11 shows I-W characteristics.

Amount of catalysts supported on the electrode are shown in TABLE 3.

**TABLE 3**

| AMOUNT OF CATALYST | |
|---|---|
| ANODE | Pt 1.0 mg/cm², Ru 0.5 mg/cm² |
| CATHODE | Pt 1.0 mg/cm² |

In Example 3, as clearly shown in Figs. 9 and 11, the MEA was not adapted and no output characteristics were observed zero hour elapsed after forming the MEA; the output characteristics (the maximum power density, etc.) were highly superior to those of Comparative Example, in which the carbon paper was used as the diffusion layer, one hour and three hours elapsed.

## Claims

1. A fuel cell comprising a cell element, in which a cathode layer is formed on one side of an electrolyte membrane and an anode layer is formed on the other side thereof, and generating an electromotive force through oxidation-reduction reaction, which occurs via the electrolyte membrane, between a fuel such as methane and an oxidant such as oxygen supplied,
wherein at least one of the cathode layer and the anode layer contains an electrode material.

2. The fuel cell according to claim 1, wherein a catalyst metal is supported by the carbonized silk body.

3. The fuel cell according to claim 1, wherein the carbonized silk body has a catalyst layer including a carbon material which supports a catalyst metal.

4. The fuel cell according to claim 2 or 3, wherein the catalyst metal is platinum or platinum-ruthenium.

5. The fuel cell according to claim 1, 2 or 3, wherein the carbonized silk body is formed into a sheet-shaped with airspaces by burning the cloth-formed silk material.

6. The fuel cell according to claim 1, 2 or 3, wherein a harmful substance decomposer is supported by the carbonized silk body.

7. The fuel cell according to claim 6, wherein the harmful substance decomposer is metallophthalocyanine derivative.

8. An electrode material for a fuel cell being composed of a carbonized silk body obtained by burning a silk material.

9. The electrode material according to claim 8, wherein a catalyst metal is supported by the carbonized silk body.

10. The electrode material according to claim 8, wherein the carbonized silk body has a catalyst layer including carbon powders which support catalyst metals.

11. The electrode material according to claim 9 or 10, wherein the catalyst metal is platinum or platinum-rutheniium.

12. The electrode material according to claim 9 or 10, wherein the carbonized silk body is formed into a sheet-shaped with airspaces by burning the cloth-formed silk material.

13. The electrode material according to claim 8, 9 or 10, wherein the silk material is burned at temperature of 1000-3,000°C.

14. The electrode material according to claim 8, 9 or 10, wherein the carbonized silk body is activation-treated so as to form many micro fine holes in a surface thereof.

15. A method for producing an electrode material of a fuel cell, which is constituted by a carbonized silk body, comprising a plurality of steps of burning a silk material in an inert gas atmosphere so as to form the carbonized silk body ,
wherein each of the burning steps comprises the steps of:
primary-burning the silk material with temperature rising rate of 100°C /hour or less until reaching a burning temperature and maintaining the burning temperature for several hours;
cooling the burned silk material until reaching the room temperature; and
secondary-burning the silk material at another burning temperature, which is higher than the burning temperature of the primary-burning step.

16. The method according to claim 15, wherein the burning temperature of the final burning step is 1000-3,000°C.

17. The method according to claim 15, further comprising the step of supporting a catalyst metal on the carbonized silk body.

18. The method according to claim 15 or 16, wherein the silk material is formed into cloth made of yarns.

19. The method according to claim 15 or 16, further comprising the step of exposing the silk material, which has been secondary-burned, to high-temperature steam as an activation treatment.
